# EUROPEAN PATENT SPECIFICATION

(11) **EP 1 062 831 B1**
(45) Date of publication and mention of the grant of the patent: **03.08.2005**
(21) Application number: 99911999.3
(22) Date of filing: 10.03.1999
(51) Int. Cl.: H04Q 9/04, H04L 12/403

(54) **METHOD AND SYSTEM FOR TRANSMITTING DATA**
DATENÜBERTRAGUNG VERFAHREN UND SYSTEM
PROCEDE ET SYSTEME DE TRANSMISSION DE DONNEES

(30) Priority: 10.03.1998 NL 1008548
(43) Date of publication of application: 27.12.2000
(73) Proprietor: Koninklijke KPN N.V., 9726 AE Groningen (NL)
(72) Inventor: PIETERSE, Rob, NL-2111 ZL Aerdenhout (NL); DE LEEUW, Edo, Mark, Alexander, NL-3551 SW Utrecht (NL); VAN DER PUT, Ronald, Robertus, Gerardus, L., NL-1315 JN Almere (NL)
(74) Representative: Prins, Adrianus Willem, Mr. Ir.
(86) International application number: PCT/IB1999/000702
(87) International publication number: WO 1999/046745

(56) References cited:
- EP-A- 0 529 269
- US-A- 4 466 001
- US-A- 5 297 144

## Description

The invention relates to a method for transmitting data from several first stations to a second station, the first stations each comprising at least a first transmitter, a first receiver and a first clock and the second station comprising at least a second transmitter, a second receiver and a second clock, the method comprising:
- transmitting, in a synchronisation time slot of a time window, a synchronisation message from the second station to the first stations,
- transmitting, in a selection time slot of the time window, selection messages from the second station to selected first stations,
- deactivating the receivers of the first stations at the end of the selection time slot,
- transmitting, in response time slots of the time window, data from selected first stations to the second station.
Such a method is disclosed in the American patent specification US-A-5,297,144.

A method of the above type is applied, e.g., for transmitting data, such as measurement data, from several dispersed local stations (first stations) to a central station (second station). In doing so, the second station, which collects the data from the first stations and/or passes it on to a further station, may have the first stations transmit data by polling. The transmission may take place wirelessly by way of, e.g., a radio link, but also by way of a cable. To the data, there may be added an identification of the transmitting first station. The drawback of such a method is, firstly, that each first station must be continuously capable of receiving the call signal (selection signal) and of transmitting data. In other words: the transmitter and receiver of the first station should be permanently activated. For battery-powered first stations, however, the problem arises that as a result the battery may be exhausted relatively fast. A method of the above type secondly has the drawback that, in supplement of the data, there should always be transmitted the identification of the transmitting first station, which requires additional transmission time and therefore additional energy.

In the above American patent specification, a method is proposed in which the first stations wait for a selection message (call message). Immediately after receiving a selection message intended for the station in question, the response time slot commences in which the first station transmits its data. In anticipation of a next selection time slot, the other first stations should keep their receivers switched on. As a result, the first stations consume a relatively large amount of energy. In addition, for this known method, there is a reservation time slot present in the time window for each first station. In the event of large numbers of first stations, this results in an unacceptably large time window.

The American patent specification US-A-4 466 001 also describes a system for transmitting data in which selection messages are each time transmitted to the various first stations. By polling the first stations with intervals, here, too, the receivers of the first stations should be switched on for a relatively extensive period of time.

The European patent specification EP-A2-0 529 269 discloses a method and apparatus for conserving battery power, wherein selection messages for first stations having wireless link adapters, each wireless link adapter having a transmitter and receiver, are transmitted in a selection time slot, after which time slot the wireless link adapters of the first stations are switched off, insofar the first station is scheduled for further communication. In this method the wireless link adapters are switched on during the selection time slot even if a selection message has been received.

The object of the present invention is to eliminate the above and other drawbacks, and to provide a method of the type referred to in the preamble, which facilitates a very efficient energy consumption of the first stations.
The object of the invention is achieved by a method according to the characterising part of claim 1.

By transmitting the selection messages in one single selection time slot, the time period during which the receivers of the first stations must be activated to collect any further selection messages, is severely restricted. In the single selection time slot, each first station may verify whether there has been transmitted a selection message intended for it. If such is not the case, the first station in question may deactivate its receiver for the remainder of the time window, since there will follow no further selection messages. As a result, there are attained significant savings in energy, which will significantly extend the effective operating time of the first stations, particularly battery-powered first stations.

Deactivating the receivers of the unselected first stations may take place at the end of the selection time slot, e.g., at a predetermined time, or in response to a deactivation message, which may also be transmitted in the selection time slot. The selection messages are advantageously transmitted in a predetermined order, and deactivating takes place based on the sequence. As a result, it is possible that, prior to the end of the selection time slot, a first station may already determine, based on selection messages located earlier in the sequence, that there will be transmitted no selection message intended for it. This has the advantage that the receiver of the first station may be switched off sooner.

The sequence may be, e.g., a numeric order, a number being allotted to the first station, and the numbers being run through consecutively. There may also be applied a deviating order, stored in both the first and the second stations.

The selection messages are advantageously transmitted in a predetermined order, and deactivation takes place based on the order. By alternately using, e.g., an ascending and descending number sequence, it is prevented that specific first stations must always wait longer than other ones before their respective selection message is transmitted or not. As a result, the energy consumption of the first stations is distributed more evenly.

The selection messages may each contain a time indication of the respective response time slots. In this manner, there may be realised a suitable allocation of the available response time slots for each time window. In addition, it is achieved that for all selected first stations the response time slot in question is known no later than at the end of the selection time slot.

A flexible allocation of the response time slots may also be achieved if the selection messages each contain a time indication of command time slots following the selection time slot for transmitting command messages from the second station to the selected first station.

A command message preferably contains a time indication of a response time slot. By introducing such a form of indirection, command messages may be transmitted to the selected first stations. Since only the selected first stations need an activated receiver during the command time slots, the required amount of additional energy is minimal.

In order to achieve further energy savings, the transmitter of each first station is only activated during the respective response time slot.

Although the time window may have a fixed, predetermined duration, the duration of the actual time window is advantageously transmitted from the second station in the synchronisation time slot to the first stations. As a result, it is possible to adjust the duration of each time window to the number of first stations to be selected, i.e., the amount of data to be transmitted.

The object of the invention is further achieved by a system for transmitting data according to claim 9.
A system according to the invention reduces power consumption of the first stations and extends operating time.
The object of the invention is further achieved by a first station according to claim 10.
A local station or first station according to the invention reduces power consumption and extends operating time.

An embodiment of the local station according to claim 11, even further reduces power consumption.

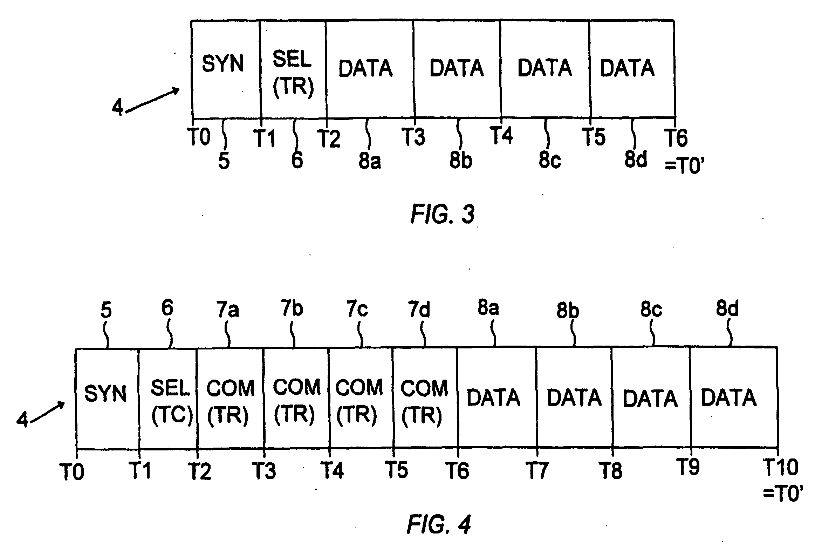

The invention will be explained in greater detail hereinbelow by reference to the figures.

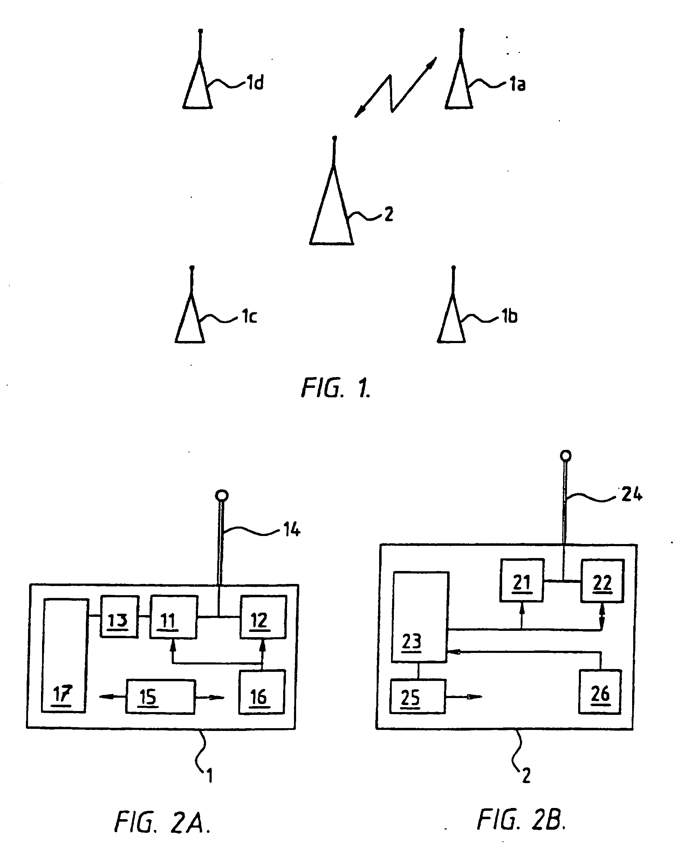

FIG. 1 schematically shows a system for transmitting data, to which the present invention may be applied.
Figures FIG. 2A and 2B schematically show a first station and the second station of the system of FIG. 1, respectively.
Figures FIG. 3 and 4 schematically show time windows for transmitting data in accordance with several embodiments of the present invention.

The system schematically shown in FIG. 1 and shown only by way of example for transmitting data, comprises first stations 1a, 1b, 1c, 1d and a second station 2. Although in FIG. 1 four first stations are shown, basically any number of first stations may be applied. The first stations 1a-1d which, e.g., occupy fixed positions, may form, e.g., measurement stations for measuring meteorological or geological data. The second station 2 may comprise a fixed station, but may also be formed by, e.g., a satellite.

In FIG. 2A, a first station 1 is schematically shown in greater detail. The first station 1 comprises a transmitter 11, a receiver 12, a control apparatus 13, an antenna 14, a battery 15, a clock 16 and a measuring apparatus 17, which are mutually coupled. The measuring apparatus 17 may be provided with sensors (not shown) and a data buffer. The clock 16 may be, e.g., a clock for universal time (e.g., GMT [= Greenwich Mean Time]), or a synchronised counter.

The second station 2 schematically shown in FIG. 2B comprises a transmitter 21, a receiver 22, a processing unit 23, an antenna 24, a power supply 25 and a clock 26, which are mutually coupled. The processing unit 23, which may be formed by, e.g., a microprocessor, may serve both for processing data (e.g., measurement data transmitted from the first stations) and for controlling the second station 2.

The transmitters 11 and 21, and the receivers 12 and 22, may be commercially available components which are arranged, e.g., for wireless transmission by way of a suitable radio frequency which may also lie in a frequency band for wireless telephony (e.g., GSM [= Global System for Mobile communications].
Basically, use may be made of one frequency for both the transmitter and the receiver (half duplex), but it is also possible to use different frequencies for the transmitter and the receiver.

In the system of FIG. 1, data is to be transmitted from the first stations 1a-1d to the second station. In accordance with the invention, the second (central) station 2 unequivocally allots time slots to the first stations 1a-1d for this purpose within a time window. This will be explained in greater detail by reference to the figures FIG. 3 and 4.

The time window 4 schematically shown in FIG. 3 comprises four consecutive response time slots 8a, 8b, 8c and 8d, which start at the times T2, T3, T4 and T5, respectively. Each of the time slots 8a-8d is allotted to one of the first stations 1a-1d of FIG. 1. Here, the order of allocation is basically random. The allocation itself takes place beforehand, in an initialisation process, the receivers of all first stations being active and the second station transmitting, e.g., an identification to each first station, as well as the time limits (e.g., T3 and T4) of the allotted time slot in question. The initialisation process is carried out on the basis of the time slots 5 and 6. In the synchronisation time slot 5, which starts at time T0 (= start of the time window 4), the second station 2 transmits a synchronisation message SYN to all first stations.
In the selection time slot 6, which starts at time T1, the second station transmits a selection message SEL to selected first stations. This will be explained in greater detail later.

The first stations in their allotted time slots sequentially transmit data to the second station. In this connection, the first station la transmits, e.g., in the time slot 8a, i.e., between times T2 and T3. Subsequently, the first station 1b transmits in time slot 8b, etc. In this manner, the transmitter (11) of the first station la need be active and consume energy only between times T0 and T1, since said transmitter may be switched off at time T1. Possibly, the transmitter may be switched off earlier if the end of the data to be transmitted is reached prior to the end of the time slot. If the first station in question need not transmit any data, it is possible for the transmitter not to be switched on at all. Periodically, however, the transmitter may be activated to report the correct functioning of the first station.

The receivers (12) of the first stations may be switched off during or after the selection time slot 6, i.e., no later than time T2. This will be explained in greater detail later.

Preferably, the time window 4 is cyclically repeated, the time slot 5 of the next time window following the time slot 8d (T6=T0'). As a result, as shown in FIG. 3 each first station permanently has at its disposal one-fourth part of the response time slots 8 of the time window 4 for transmitting data, so that each transmitter is inactive for more than three-quarters of the duration of time window 4. The receivers of the first stations are preferably switched off during the response time slots 8.

At the start of the time window 4, a synchronisation message SYN and a selection message SEL are transmitted. On the basis of the synchronisation message SYN, the first clocks 16 are synchronised with the second clock 26; see figures FIG. 2A and 2B. For this purpose, in each time window the receivers of the first stations are on during the synchronisation time slot 5. As a rule, it will not be necessary to transmit a synchronisation message SYN in each time window 4. It is therefore possible to carry out the method according to the invention with at least a few time windows in which no synchronisation message SYN is present, and possibly no synchronisation time slot 5.

In selection time slot 6, the second station subsequently transmits selection or request messages SEL. Said selection messages each contain a first identification ("address") ID for indicating a specific first station, and a second identification ("time") TR for indicating an allotted response time slot. The first identification ("address") may be a number which is permanently allotted to a first station. The second identification preferably is a start time (e.g., T4) of a response time slot 8. The start time is advantageously expressed as a time difference with respect to start time T0 of the time window. Possibly, the second identification may also contain an end time (e.g., T5) of the time slot in question, or the number of bytes to be transmitted. The amount of selection information to be transmitted may be restricted, however, by laying down the duration of the response time slots in advance, so that there need not be transmitted any end time or number of data units.

The selection messages are consecutively transmitted in the single selection time slot 6. In this time slot 6, therefore, there on the receivers of all first stations having data to be transmitted are on. As soon as an identification of a time slot is received by the station in question, it may switch off its receiver. If the identifications are transmitted in numerical order, the first station having, e.g., the highest number, will have to keep its receiver activated the longest. In order to be able to distribute the energy consumption of the receivers proportionally among the first stations, the table (or identifications of first stations having allotted time slots, respectively) is run through and transmitted alternately in ascending and descending order. It is also possible each time to run through said identifications in another, preferably randomly determined, order.

In response to the selection or request message (SEL), the first station in question transmits data to the second station in the response time slot allotted to it.

Therefore, the receiver of a first station need only be activated during selection time slot 6. The receivers of the first stations are preferably activated during each synchronisation time slot 5 as well. Such is not necessary, however, if the duration of the time window 4 does not change and the first clocks are sufficiently accurate.

A first station may optionally transmit an overflow message M, indicating that more data is present than is capable of being transmitted in one response time slot. In such case, said overflow message M is included in the data field of the time slot 8 in question. If there is an overflow message M present in a response time slot, the first station in question will have the opportunity, if possible, to transmit supplementary data. Such may be realised in several ways.

The second station will preferably prepare a table having first stations which did transmit an overflow message M, a selection message SEL being transmitted in a subsequent time window (4') only to those first stations which did transmit an overflow message M in the preceding time window. In this connection, other and/or supplementary time slots may possibly be allotted to said first stations.

In FIG. 4, there are added command time slots 7 to the time window 4, namely, between the selection time slot 6 and the first response time slot 8a. In the command time slots 7 - the four command time slots 7a-7d in the embodiment shown - the second station transmits commands COM to the selected first stations.

The second identifications ("times") TR of the selection messages do not indicate the response time slots 8, but rather the command time slots 7. In other words, based on the selection messages SEL each first station may determine whether, and if so when, it will receive a command message COM. First stations which are not selected may switch off their receiver for the remainder of the time window in question.

The command messages COM preferably contain a first identification ("address") ID indicating a first respective station and a second identification ("time") TR indicating a response time slot 8. In this respect, the command messages COM correspond to the selection messages SEL. The command messages COM, however, may also contain a command (instruction) for the first station in question. Such a command, e.g., instructs a measuring apparatus connected to the first station to carry out an operation, or changes the settings of the first station itself.

The first identification ("address") ID containing a command message COM may include a subaddress indicating a part (e.g., a connected measuring apparatus) of the first station, and/or a superaddress indicating several first stations. In the latter case, a supplementary address may be transmitted to a first station, enabling a separate identification within the group indicated by the superaddress.

By way of the command time slots and the indirection offered thereby, a very flexible transmission of commands and allocation of response time slots are possible. Still, the additional energy consumption of the first stations is minimal, since they need to activate their receivers only during the command time slot allocated to them.

It will be understood too, that energy is saved in the first stations, since the transmitters and/or receivers of the first stations may be inactive most of the time.

An even more flexible method is provided if the length of the time window 4 is variable. For this purpose, the synchronisation message SYN, which is transmitted in the synchronisation time slot 5, may also contain an indication of the end (T10 in FIG. 4) of the time window. Said indication preferably has the form of a time difference with respect to start time T0.

Although in the above description it was assumed that in each time window 4 a response time slot 8 is allotted to all first stations, such need not be the case at all and the second station (in a specific time window) may allot a response time slot only to one or a few first stations. Possibly, the first stations, which are not selected in a specific time window, may have their turn in a subsequent time window.

A major advantage of the present invention is the fact that the number of first stations is substantially unlimited. By adaptively allotting, in each time window, time slots to first stations, it is possible, with a single second station, to transmit data from a substantially arbitrary number of first stations.

The second station therefore first broadcasts a synchronisation message intended for all first stations, subsequently selection messages intended for selected first stations, possibly also command messages intended only for selected first stations, to eventually receive data from the selected first stations in the time slots allotted to them. On the basis of the selection messages, the first stations switch off their receiver or not. They are preponderantly passive, but may pass along an overflow message along with their data, indicating that they have more data to transmit. Also, the transmission of data by a first station in the time slot allotted thereto serves as a confirmation of receipt of the selection and/or command message in question. The first stations, therefore, need not transmit any confirmation or reservation message.

It will be understood by those skilled in the art that many modifications and amendments are possible without departing from the scope of the invention as defined by the appended claims.

## Claims

1. Method for transmitting data from several first stations (1a-1n) to a second station (2), the first stations each comprising at least a first transmitter (11), a first receiver (12) and a first clock (16), and the second station (2) comprising at least a second transmitter (21), a second receiver (22) and a second clock (26), the method comprising:
- transmitting, in a synchronisation time slot (5) of a time window (4), a synchronisation message (SYN) from the second station (2) to the first stations (1),
- transmitting, in a selection time slot (6) of the time window (4), selection messages (SEL) from the second station (2) to selected first stations (1),
- deactivating the receivers (12) of the first stations (1) at the end of the selection time slot (6),
- transmitting, in response time slots (8) of the time window (4), data from selected first stations (1) to the second station (2),
**characterised by**
each first station (1), to which a selection message (SEL) corresponding to that first station (1) has been transmitted by the second station (2), deactivating its receiver as soon as the corresponding selection message (SEL) is received by the first station before the end of the selection time slot (6, T2).

2. Method according to claim 1, wherein the selection messages (SEL) are transmitted in a predetermined sequence and the deactivation takes place based on the sequence.

3. Method according to claim 2, wherein several sequences are applied and a sequence indication of the sequence to be applied in a specific time window (4) is transmitted by the second station (2) in the synchronisation time slot (5).

4. Method according to any of the preceding claims, wherein the selection messages (SEL) each contain a time indication (TR) of the response time slots (8).

5. Method according to any of the preceding claims, wherein the selection messages (SEL) each contain a time indication (TC) of command time slots (7) following the selection time slot (6) for transmitting command messages (COM) from the second station (2) to the selected first station (1).

6. Method according to claim 5, wherein a command message (COM) contains a time indication (TR) of a response time slot (8).

7. Method according to any of the preceding claims, wherein the transmitter (11) of each first station (1) is activated only during the respective response time slot (8).

8. Method according to any of the preceding claims, wherein the duration of the current time window (4) is transmitted to the first stations (1) by the second station (2) in the synchronisation time slot (5).

9. A system for transmitting data, comprising:
- a plurality of first stations (1), each having a first transmitter (11), a first receiver (12), a first control unit (13) and a first clock (16),
- a second station (2) having a second transmitter (21), a second receiver (22), a second control unit (23) and a second clock (26),
- wherein the first stations (1) and the second station are arranged to communicate with each other in a time window (4),
- wherein the second station (2) is arranged for sending a synchronisation message (SYN) to the first stations in a synchronisation time slot (5) of the time window (4),
- the first stations (1) are arranged for receiving the synchronisation message (SYN) and synchronising their clocks (16) based on the synchronisation message (SYN),
- wherein the second station is further arranged for transmitting selection messages (SEL) in a selection time slot (6), the selection messages (SEL) indicating first stations,
- wherein the first stations are further arranged to receive the selection messages (SEL),
- wherein the first stations are further arranged to transmit data to the second station in response time slots (8) of the time window (4)according to the reception of the selection messages (SEL) corresponding with the first stations,
- wherein the first stations are further arranged to deactivate their receivers at the end of the selection time slot (6, T2),
**characterised in that** the system comprises means arranged for performing the steps of a method according to any of the preceding claims.

10. A first station (1), comprising a transmitter (11), a receiver (12), a control unit (13) and a clock (16),
- arranged to receive in a synchronisation time slot (5) of a time window (4), a synchronisation message (SYN) from a second station (2),
- and further arranged to receive, in a selection time slot (6) of the time window (4), a selection message (SEL) from the second station (2),
- and further arranged to deactivate the receiver (12) at the end of the selection time slot (6),
- and further arranged to transmit data to the second station (2), in a response time slot (8) of the time window (4),
**characterised in that** the first station is further arranged to deactivate its receiver as soon as the corresponding selection message (SEL) is received before the end of the selection time slot (6, T2).

11. The first station according to claim 10, wherein the transmitter (11) is activatable only during the response time slot (8).

## Patentansprüche

1. Verfahren zum Übertragen von Daten von mehreren ersten Stationen (1a-1n) an eine zweite Station (2), wobei die ersten Stationen jeweils mindestens einen ersten Sender (11), einen ersten Empfänger (12) und eine erste Uhr (16) aufweisen und die zweite Station (2) mindestens einen zweiten Sender (21), einen zweiten Empfänger (22) und eine zweite Uhr (26) aufweist, wobei bei dem Verfahren:
- in einem Synchronisationszeitschlitz (5) eines Zeitfensters (4) eine Synchronisationsnachricht (SYN) von der zweiten Station (2) an die ersten Stationen (1) übertragen wird,
- in einem Auswahlzeitschlitz (6) des Zeitfensters (4) Auswahlnachrichten (SEL) von der zweiten Station (2) an ausgewählte erste Stationen (1) übertragen werden,
- die Empfänger (12) der ersten Stationen (1) an dem Ende des Auswahlzeitschlitzes (6) deaktiviert werden,
- in Antwortzeitschlitzen (8) des Zeitfensters (4) Daten von ausgewählten ersten Stationen (1) an die zweite Station (2) übertragen werden,
**dadurch gekennzeichnet, daß**
jede erste Station (1), an die von der zweiten Station (2) eine dieser ersten Station (1) entsprechende Auswahlnachricht (SEL) übertragen worden ist, ihren Empfänger vor dem Ende des Auswahlzeitschlitzes (6, T2) deaktiviert, sobald die entsprechende Auswahlnachricht (SEL) von der ersten Station empfangen ist.

2. Verfahren nach Anspruch 1, bei dem die Auswahlnachrichten (SEL) in einer vorbestimmten Abfolge übertragen werden und bei dem die Deaktivierung auf Basis der Abfolge erfolgt.

3. Verfahren nach Anspruch 2, bei dem mehrere Abfolgen Anwendung finden und bei dem von der zweiten Station (2) in dem Synchronisationszeitschlitz (5) eine Abfolgeangabe der in einem bestimmten Zeitfenster (4) anzuwendenden Abfolge übertragen wird.

4. Verfahren nach einem der vorhergehenden Ansprüche, bei dem die Auswahlnachrichten (SEL) jeweils eine Zeitangabe (TR) der Antwortzeitschlitze (8) enthalten.

5. Verfahren nach einem der vorhergehenden Ansprüche, bei dem die Auswahlnachrichten (SEL) jeweils eine Zeitangabe (TC) von dem Auswahlzeitschlitz (6) folgenden Befehlszeitschlitzen (7) zum Übertragen von Befehlsnachrichten (COM) von der zweiten Station (2) an die ausgewählte erste Station (1) enthalten.

6. Verfahren nach Anspruch 5, bei dem eine Befehlsnachricht (COM) eine Zeitangabe (TR) eines Antwortzeitschlitzes (8) enthält.

7. Verfahren nach einem der vorhergehenden Ansprüche, bei dem der Sender (11) jeder ersten Station (1) nur während des entsprechenden Antwortzeitschlitzes (8) aktiviert wird.

8. Verfahren nach einem der vorhergehenden Ansprüche, bei dem die Dauer des aktuellen Zeitfensters (4) von der zweiten Station (2) in dem Synchronisationszeitschlitz (5) an die ersten Stationen (1) übertragen wird.

9. System zur Übertragung von Daten mit:
- einer Vielzahl erster Stationen (1), von denen jede einen ersten Sender (11), einen ersten Empfänger (12), eine erste Steuereinheit (13) und eine erste Uhr (16) aufweist,
- eine zweite Station (2) mit einem zweiten Sender (21), einem zweiten Empfänger (22), einer zweiten Steuereinheit (23) und einer zweiten Uhr (26),
- wobei die ersten Stationen (1) und die zweite Station ausgestaltet sind, um miteinander in einem Zeitfenster (4) zu kommunizieren,
- wobei die zweite Station (2) ausgestaltet ist, um in einem Synchronisationszeitschlitz (5) des Zeitfensters (4) eine Synchronisationsnachricht (SYN) an die ersten Stationen zu senden,
- wobei die ersten Stationen (1) ausgestaltet sind, um die Synchronisationsnachricht (SYN) zu empfangen und ihre Uhren (16) auf Basis der Synchronisationsnachricht (SYN) zu synchronisieren,
- wobei die zweite Station ferner ausgestaltet ist, um in einem Auswahlzeitschlitz (6) Auswahlnachrichten (SEL) zu übertragen, die erste Stationen kennzeichnen,
- wobei die ersten Stationen ferner ausgestaltet sind, um die Auswahlnachrichten (SEL) zu empfangen,
- wobei die ersten Stationen ferner ausgestaltet sind, um in Antwortzeitschlitzen (8) des Zeitfensters (4) gemäß dem Empfang der Auswahlnachrichten (SEL), die den ersten Stationen entsprechen, Daten an die zweite Station zu übertragen,
- wobei die ersten Stationen ferner ausgestaltet sind, um ihre Empfänger an dem Ende des Auswahlzeitschlitzes (6, T2) zu deaktivieren,
**dadurch gekennzeichnet, daß** das System Mittel aufweist, die ausgestaltet sind, um die Schritte eines Verfahrens nach einem der vorhergehenden Ansprüche auszuführen.

10. Erste Station (1) mit einem Sender (11), einem Empfänger (12), einer Steuereinheit (13) und einer Uhr (16),
- die ausgestaltet ist, um in einem Synchronisationszeitschlitz (5) eines Zeitfensters (4) eine Synchronisationsnachricht (SYN) von einer zweiten Station (2) zu empfangen,
- und die ferner ausgestaltet ist, um in einem Auswahlzeitschlitz (6) des Zeitfensters (4) eine Auswahlnachricht (SEL) von der zweiten Station (2) zu empfangen,
- und die ferner ausgestaltet ist, um den Empfänger (12) an dem Ende des Auswahlzeitschlitzes (6) zu deaktivieren,
- und die ferner ausgestaltet ist, um in einem Antwortzeitschlitz (8) des Zeitfensters (4) Daten an die zweite Station (2) zu übertragen,
**dadurch gekennzeichnet, daß**
die erste Station ferner ausgestaltet ist, um ihren Empfänger vor dem Ende des Auswahlzeitschlitzes (6, T2) zu deaktivieren, sobald die entsprechende Auswahlnachricht (SEL) empfangen ist.

11. Erste Station nach Anspruch 10, bei der der Sender (11) nur während des Antwortzeitschlitzes (8) aktivierbar ist.

## Revendications

1. Procédé pour transmettre des données depuis plusieurs premières stations (1a-1n) à une seconde station (2), chacune des premières stations comportant au moins un premier émetteur (11), un premier récepteur (12) et une première horloge (16), et la seconde station (2) comportant au moins un second émetteur (21), un second récepteur (22) et une seconde horloge (26), le procédé comportant les étapes consistant à :
- transmettre, dans un créneau temporel de synchronisation (5) d'une fenêtre temporelle (4), un message de synchronisation (SYN) depuis la seconde station (2) aux premières stations (1),
- transmettre, dans un créneau temporel de sélection (6) de la fenêtre temporelle (4), des messages de sélection (SEL) depuis la seconde station (2) aux premières stations (1) sélectionnées,
- désactiver les récepteurs (12) des premières stations (1) à la fin du créneau temporel de sélection (6),
- transmettre, dans des créneaux temporels de réponse (8) de la fenêtre temporelle (4), des données depuis les premières stations (1) sélectionnées à la seconde station (2),
**caractérisé en ce que**
chaque première station (1), à laquelle un message de sélection (SEL) correspondant à cette première station (1) a été transmis par la seconde station (2), désactive son récepteur aussitôt que le message de sélection correspondant (SEL) est reçu par la première station avant la fin du créneau temporel de sélection (6, T2).

2. Procédé selon la revendication 1, dans lequel les messages de sélection (SEL) sont transmis dans une séquence prédéterminée et la désactivation a lieu sur la base de la séquence.

3. Procédé selon la revendication 2, dans lequel plusieurs séquences sont appliquées et une indication de séquence de la séquence à appliquer dans une fenêtre temporelle spécifique (4) est transmise par la seconde station (2) dans le créneau temporel de synchronisation (5).

4. Procédé selon l'une quelconque des revendications précédentes, dans lequel chacun des messages de sélection (SEL) contient une indication temporelle (TR) des créneaux temporels de réponse (8).

5. Procédé selon l'une quelconque des revendications précédentes, dans lequel tous les messages de sélection (SEL) contiennent une indication temporelle (TC) de créneaux temporels d'instruction (7) suivant le créneau temporel de sélection (6) pour transmettre des messages d'instruction (COM) depuis la seconde station (2) à la première station (1) sélectionnée.

6. Procédé selon la revendication 5, dans lequel un message d'instruction (COM) contient une indication temporelle (TR) d'un créneau temporel de réponse (8).

7. Procédé selon l'une quelconque des revendications précédentes, dans lequel l'émetteur (11) de chaque première station (1) est activé uniquement pendant le créneau temporel de réponse respectif (8).

8. Procédé selon l'une quelconque des revendications précédentes, dans lequel la durée de la fenêtre temporelle courante (4) est transmise aux premières stations (1) par la seconde station (2) dans le créneau temporel de synchronisation (5).

9. Système pour transmettre des données, comportant :
- une pluralité de premières stations (1), chacune ayant un premier émetteur (11), un premier récepteur (12), une première unité de commande (13) et une première horloge (16),
- une seconde station (2) ayant un second émetteur (21), un second récepteur (22), une seconde unité de commande (23) et une seconde horloge (26),
- dans lequel les premières stations (1) et la seconde station sont conçues pour communiquer entre elles dans une fenêtre temporelle (4),
- dans lequel la seconde station (2) est conçue pour envoyer un message de synchronisation (SYN) aux premières stations dans un créneau temporel de synchronisation (5) de la fenêtre temporelle (4),
- les premières stations (1) sont conçues pour recevoir le message de synchronisation (SYN) et synchroniser leurs horloges (16) sur la base du message de synchronisation (SYN),
- dans lequel la seconde station est en outre conçue pour transmettre des messages de sélection (SEL) dans un créneau temporel de sélection (6), les messages de sélection (SEL) indiquant des premières stations,
- dans lequel les premières stations sont en outre conçues pour recevoir les messages de sélection (SEL),
- dans lequel les premières stations sont en outre conçues pour transmettre des données à la seconde station dans les créneaux temporels de réponse (8) de la fenêtre temporelle (4) conformément à la réception des messages de sélection (SEL) correspondant aux premières stations,
- dans lequel les premières stations sont en outre conçues pour désactiver leurs récepteurs à la fin du créneau temporel de sélection (6, T2),
**caractérisé en ce que** le système comporte des moyens conçus pour exécuter les étapes d'un procédé conformément à l'une quelconque des revendications précédentes.

10. Première station (1), comportant un émetteur (11), un récepteur (12), une unité de commande (13) et une horloge (16),
- conçue pour recevoir dans un créneau temporel de synchronisation (5) d'une fenêtre temporelle (4), un message de synchronisation (SYN) en provenance d'une seconde station (2),
- et en outre conçue pour recevoir, dans un créneau temporel de sélection (6), de la fenêtre temporelle (4), un message de sélection (SEL) en provenance de la seconde station (2),
- et en outre conçue pour désactiver le récepteur (12) à la fin du créneau temporel de sélection (6),
- et en outre conçue pour transmettre des données à la seconde station (2) dans un créneau temporel de réponse (8) de la fenêtre temporelle (4),
**caractérisée en ce que**
la première station est en outre conçue pour désactiver son récepteur aussitôt que le message de sélection (SEL) correspondant est reçu avant la fin du créneau temporel de sélection (6, T2).

11. Première station selon la revendication 10, dans laquelle l'émetteur (11) peut être activé uniquement pendant le créneau temporel de réponse (8).
